(19) Europäisches Patentamt
European Patent Office
Office européen des brevets

(11) EP 0 566 954 B1

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.[6]: **C08G 18/10**, C08G 18/62, C08G 18/73, C08G 18/75, C09D 175/04

(21) Anmeldenummer: 93105955.4

(22) Anmeldetag: **13.04.1993**

(54) **Verfahren zur Herstellung von Isocyanatprepolymeren und ihre Verwendung zur Herstellung von Beschichtungsmitteln**

Process for the preparation of isocyanate-prepolymers and their use in the production of coating agents

Procédé de préparation de prépolymères d'isocyanate et leur utilisation dans la production des agents de revêtement

(84) Benannte Vertragsstaaten:
**AT BE CH DE ES FR GB IT LI NL**

(30) Priorität: **23.04.1992 DE 4213361**

(43) Veröffentlichungstag der Anmeldung:
**27.10.1993 Patentblatt 1993/43**

(73) Patentinhaber: **BAYER AG**
**51368 Leverkusen (DE)**

(72) Erfinder:
• **Brahm, Martin, Dr.**
**W-5250 Engelskirchen 2 (DE)**
• **Schmalstieg, Lutz, Dr.**
**W-5000 Köln (DE)**
• **Kubitza, Werner, Dipl.-Ing.**
**W-5090 Leverkusen 3 (DE)**
• **Hovestadt, Wieland, Dr.**
**W-4150 Krefeld (DE)**
• **Pedain, Josef, Dr.**
**W-5000 Köln 80 (DE)**

(56) Entgegenhaltungen:
**EP-A- 0 380 379**

• **CHEMICAL ABSTRACTS, vol. 100, no. 26 Columbus, Ohio, US; abstract no. 211817t, & JP-A-59 025 812**

## Beschreibung

Die Erfindung betrifft die Herstellung von lösungsmittelhaltigen NCO-Prepolymeren auf Basis von a) ausgewählten Lackpolyisocyanaten und b) ausgewählten Polyhydroxypolyacrylaten, die nach diesen Verfahren erhaltenen NCO-Prepolymeren und ihre Verwendung zur Herstellung von Beschichtungsmitteln.

Feuchtigkeitshärtende, Einkomponenten-Beschichtungsmittel auf Basis von NCO-Gruppen aufweisenden Prepolymeren sind seit langem bekannt (Houben-Weyl, Methoden der Organischen Chemie, Band E 20, Georg Thieme Verlag, Stuttgart, New York, 1978). Die NCO-Prepolymeren werden im allgemeinen durch Umsetzung von aromatischen oder aliphatischen Polyisocyanaten mit Polyether- oder Polyesterpolyolen oder mit kurzkettigen Alkoholen hergestellt.

NCO-Prepolymere auf Basis von niedermolekularen höherfunktionellen Alkoholen wie beispielsweise Butandiol und/oder Trimethylolpropan führen bei alleiniger Verwendung als Bindemittel in 1K-Beschichtungsmitteln im allgemeinen zu Lackfilmen einer unzureichenden Elastizität.

NCO-Prepolymere auf Basis von Polyetherpolyolen weisen im allgemeinen eine für die Praxis ungenügende Licht- bzw. UV-Stabilität auf.

NCO-Prepolymere auf Polyesterbasis weisen diese Nachteile zwar nicht auf, sie sind jedoch wegen des Vorliegens von Esterbindungen hydrolyseempfindlich, was oftmals zu einer unzureichenden Feuchtigkeitsstabilität der resultierenden Überzüge führt.

Es war daher die der Erfindung zugrundeliegende Aufgabe, neue, licht-und hydrolysebständige, freie Isocyanatgruppen aufweisende Prepolymere zur Verfügung zu stellen, die zur Herstellung von lagerstabilen Einkomponenten-Beschichtungsmitteln geeignet sind, die nicht mit den aufgezeigten Nachteilen des Standes der Technik behaftet sind.

Diese Aufgabe konnte mit dem nachstehend näher beschriebenen erfindungsgemäßen Verfahren zur Herstellung von Isocyanatgruppen aufweisenden Prepolymeren auf Basis von ausgewählten Lackpolyisocyanaten und ausgewählten Polyhydroxypolyacrylaten gelöst werden.

Hydroxylgruppen aufweisende Polyacrylate stellen zwar bekannte Ausgangsmaterialien für die Herstellung von Polyurethanlacken dar, jedoch handelt es sich hierbei in der Regel um Zweikomponenten-Polyurethanlacke, die erst kurz vor Gebrauch durch Abmischung einer Polyisocyanatkomponente mit der als Polyolkomponente dienenden Polyacrylatkomponente hergestellt werden (vgl. diesbezüglich beispielsweise Glasurit-Handbuch, Lacke und Farben 11. Auflage, Seiten 66 ff., Curt R. Vincentz Verlag, Hannover 1984).

Lagerstabile, lichtechte, als Bindemittel für feuchtigkeitshärtende Beschichtungsmittel geeignete NCO-Prepolymere auf Basis von Polyhydroxypolyacrylaten sind bislang noch nicht bekannt geworden. Die DE-OS 3 501 857 befaßt sich mit NCO-Prepolymeren auf Basis von aromatischen Polyisocyanaten, insbesondere auf Basis von Polyisocyanaten oder Polyisocyanatgemischen der Diphenylmethanreihe und Polyhydroxypolyacrylaten, die für die Herstellung von Formkunststoffen nach dem Prinzip der Reaktionsspritzgußtechnik eingesetzt werden. Zur Herstellung von Beschichtungsmitteln sind die in dieser Vorveröffentlichung beschriebenen Polyisocyanatzubereitungen nicht geeignet, da sie ausschließlich aromatisch gebundene Isocyanatgruppen aufweisen und daher nicht lichtecht sind und außerdem im allgemeinen einen für die Zwecke der Beschichtungstechnologie aus physiologischen Gründen untragbar hohen Gehalt an monomeren Diisocyanaten enthalten.

Die japanische Patentanmeldung 71 37 819 vom 02.06.1971 (Chemical Abstracts, 78 (1973), Ref.-Nr. 125 963h) befaßt sich mit NCO-Prepolymeren, in denen Polyhydroxypolyacrylate eingebaut vorliegen, jedoch handelt es sich auch hier offensichtlich um solche auf Basis von aromatischen Polyisocyanaten (TDI), die schon aus diesem Grund zur Herstellung von lichtechten Beschichtungsmitteln ungeeignet sind Irgendwelche Hinweise, welche ausgewählten Ausgangsmaterialien miteinander zur Reaktion gebracht werden müssen, um zu lagerstabilen, lichtechten NCO-Prepolymeren zu gelangen, die zur Lösung der erfindungsgemäßen Aufgabe geeignet sind, können dieser japanischen Vorveröffentlichung nicht entnommen werden.

Gegenstand der Erfindung ist ein Verfahren zur Herstellung von lagerstabilen, freie Isocyanatgruppen aufweisenden Prepolymeren durch Umsetzung von

a) organischen Polyisocyanaten mit

b) Hydroxylgruppen aufweisenden Polyacrylatharzen,

in Gegenwart von

c) organischen Lösungsmitteln und gegebenenfalls

d) weiteren Hilfs- und Zusatzmitteln

unter Einhaltung eines Äquivalentverhältnisses von Isocyanatgruppen der Komponente a) zu Hydroxylgruppen der Komponente b) und gegebenenfalls d) von 3:1 bis 40:1 dadurch gekennzeichnet, daß man

als Komponente a) Lackpolyisocyanate mit einem Gehalt an (cyclo)aliphatisch gebundenen Isocyanatgruppen von 8 bis 25 Gew.-% bei einer bei maximal 4,5 liegenden NCO-Funktionalität und

als Komponente b) ein Polyacrylatharz des Molekulargewichtsbereichs Mn 300 bis 100 000 mit einem Gehalt an alkoholischen Hydroxylgruppen von 0,05 bis 7 Gew.-%

verwendet, mit der Maßgabe, daß die Art und Mengenverhältnisse der Ausgangskomponenten a) und b) einem Wert B, der sich nach der Formel

$$F_1 + 2\,\frac{val_A}{val_I} \times F_2 = B$$

berechnet, von maximal 4 entsprechen, wobei in dieser Formel

$F_1$ und $F_2$ für die NCO- bzw. OH-Funktionalität der Komponenten a) bzw. b) stehen, wobei der Index 1 bei ungleicher Funktionalität für die Komponente mit der niedrigeren Funktionalität steht, und

$val_A/val_I$ das OH/NCO-Äquivalentverhältnis, bezogen auf die Komponenten b), gegebenenfalls d) und a) bedeutet.

Gegenstand der Erfindung sind auch die nach diesem Verfahren erhaltenen NCO-Prepolymeren.

Gegenstand der Erfindung ist schließlich auch die Verwendung der nach diesem Verfahren erhaltenen NCO-Prepolymeren zur Herstellung von feuchtigkeitshärtenden Beschichtungsmitteln.

Beim erfindungsgemäßen Verfahren werden als Ausgangskomponente a) Lackpolyisocyanate mit ausschließlich (cyclo)aliphatisch gebundenen Isocyanatgruppen eingesetzt. Diese Lackpolyisocyanate weisen bei einer mittleren NCO-Funktionalität von 2,0 bis 4,5, vorzugsweise 2,0 bis 3,9 und insbesondere 2,1 bis 3,3 einen NCO-Gehalt von 8 bis 25 Gew.-%, vorzugsweise 11 bis 24 Gew.-% und einen Gehalt an monomeren, zu ihrer Herstellung eingesetzten Ausgangsdiisocyanaten von weniger als 0,7, vorzugsweise weniger als 0,5 Gew.-% auf.

Im übrigen sind unter dem Begriff "Lackpolyisocyanat" im Rahmen der Erfindung diesen Ausführungen entsprechende Verbindungen bzw. Gemische von Verbindungen zu verstehen, die durch an sich bekannte Oligomerisierungsreaktionen von einfachen Isocyanaten, vorzugsweise Diisocyanaten mit (cyclo)aliphatisch gebundenen Isocyanatgruppen erhalten werden. Geeignete Oligomerisierungsreaktionen sind die Carbodiimidisierung, Dimerisierung, Trimerisierung, Biuretisierung, Harnstoffbildung, Urethanisierung, Allophanatisierung und/oder Cyclisierung unter Ausbildung von Oxadiazinstrukturen zu verstehen. Oftmals laufen bei der "Oligomerisierung" mehrere der genannten Reaktionen gleichzeitig oder nacheinander ab. Besonders bevorzugt handelt es sich bei den "Lackpolyisocyanaten" um (i) Biuretpolyisocyanate, (ii) Isocyanuratgruppen aufweisende Polyisocyanate, (iii) Isocyanurat- und Uretdiongruppen aufweisende Polyisocyanatgemische oder um (iv) Urethan- und/oder Allophanatgruppen aufweisende Polyisocyanatgemische auf Basis der nachstehend genannten einfachen Diisocyanate.

Verfahren zur Herstellung der Oligomerisierungsprodukte aus den einfachen Ausgangsdiisocyanaten sind beispielsweise in DE-OS 1 595 273, DE-OS 3 700 209 und 3 900 053 oder in EP-A-0 330 966, EP-A-0 259 233, EP-0 377 177 bzw. US-PS 4 385 171 beschrieben.

Geeignete Isocyanate zur Herstellung der Lackpolyisocyanate sind insbesondere Diisocyanate des Molekulargewichtsbereichs 140 bis 400 wie z.B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1-Isocyanato-3,3,5-trimethyl-5-isocyanatomethylcyclohexan (IPDI), Perhydro-2,4'- und -4,4'- und -2,2'-diphenylmethandiisocyanat, 1,12-Dodecandiisocyanat, Cyclohexan-1,3- und -1,4-diisocyanat, Xylylendiisocyanatisomere, 1,4- und 1,3-Tetramethylxylylendiisocyanat oder beliebige Gemische solcher Diisocyanate.

Besonders bevorzugt handelt es sich bei den Lackpolyisocyanaten a) um solche der genannten Art auf Basis von HDI und/oder IPDI, vorzugsweise ausschließlich um solche auf Basis von HDI.

Zur Reduzierung der Funktionalität können bei der Herstellung der Lackpolyisocyanate a) auch Monoisocyanate wie z.B. Cyclohexylisocyanat, Benzylisocyanat oder n-Hexylisocyanat mitverwendet werden, wobei deren Mitverwendung weniger bevorzugt ist. Erfindungswesentlich ist, daß zur Gewährleistung einer ausreichenden Lagerstabilität der erfindungsgemäßen Verfahrensprodukte die NCO-Funktionalität der Lackpolyisocyanate a) innerhalb der obengenannten Grenzen liegt. Die Funktionalitätswerte werden hierbei aus dem mittleren, dampfdruckosmometrisch bestimmten Molekulargewicht Mn und dem titrierten NCO-Gehalt berechnet.

Bei den Polyacrylatharzen b) handelt es sich um an sich bekannte hydroxyfunktionelle Poly(meth)acrylate oder Gemische mit Molekulargewichten Mn von 300 bis 100 000, bevorzugt 500 bis 30 000. Das Molekulargewicht Mn wird gelpermeationschromatographisch unter Verwendung von Polystyrol als Standard bestimmt.

Der Hydroxylgruppengehalt der Polyacrylatharze b) liegt bei 0,05 bis 7, vorzugsweise 0,5 bis 5 Gew.-%

Die mittlere Funktionalität der Polyacrylatharze, die sich aus dem mittleren Molekulargewicht Mn und dem titrierten Hydroxylgruppengehalt errechnen läßt, liegt im allgemeinen bei 1,5 bis 15, vorzugsweise 2,1 bis 11 und besonders bevorzugt bei 2,5 bis 7,5.

Die Zusammensetzung der zur Herstellung der Polyacrylatharze b) eingesetzten Monomeren ist nicht erfindungswesentlich, vorausgesetzt, es resultieren bei der Copolymerisationsreaktion Polyacrylatharze, die den genannten Bedingungen entsprechen.

Zum Einsatz gelangen insbesondere (i) alkoholische Hydroxylgruppen aufweisende Monomere und (ii) Monomere ohne funktionelle Gruppen. Die Mitverwendung von (iii) Monomeren, die andere funktionelle Gruppen als Hydroxylgruppen aufweisen, wie z.B. Carboxylgruppen, Epoxidgruppen oder Aminogruppen ist in geringen Anteilen möglich jedoch keineswegs bevorzugt. Im allgemeinen liegt die Menge an derartigen Monomeren (iii), falls sie überhaupt mitverwendet werden, bei maximal 3 Gew.-%, vorzugsweise bei maximal 1 Gew.-%, bezogen auf das Gesamtgewicht der eingesetzten Monomeren.

Geeignete Hydroxylgruppen aufweisende Monomere (i) sind beispielsweise Glyzerin-monoallylether, Trimethylolpropan-monoallylether, 2-Hydroxyethylallylether, 2-Hydroxyethylacrylat, 2-Hydroxypropylacrylat, 1-Hydroxymethylethylacrylat, 2,3- und 4-Hydroxybutylacrylat, die isomeren Hydroxypentylacrylate, die isomeren Hydroxyhexylacrylate und die diesen Acrylaten entsprechenden Methacrylate. Die Hydroxylgruppen aufweisenden Hydroxyalkylester können sowohl primäre als auch sekundäre Hydroxylgruppen aufweisen. Grundsätzlich möglich ist auch eine Variante, derzufolge die beispielhaft genannten Hydroxylgruppen aufweisenden Monomeren ganz oder teilweise durch Modifizierungsprodukte ersetzt werden, die dadurch erhalten werden, daß die beispielhaft genannten Hydroxyalkyl(meth)acrylate einer Modifizierungsreaktion unterzogen werden. Geeignete derartige Modifizierungsreaktionen sind beispielsweise die Anlagerung von cyclischen Estern wie beispielsweise $\varepsilon$-Caprolacton unter ringöffnender Esterbildung oder die Anlagerung von Epoxiden wie beispielsweise Ethylenoxid, Propylenoxid oder Butylenoxid oder 2-Ethylhexyl-glycidylether im Sinne einer ringöffnenden Etherbildung. Anstelle der Anlagerung von Epoxiden an Hydroxyalkylester der genannten Art können selbstverständlich bei deren Herstellung durch Alkoxylierung von Acrylsäure bzw. Methacrylsäure auch entsprechend höhere Mengen an Alkylenoxiden (mehr als 1 Mol Alkylenoxid pro Mol Säure) zum Einsatz gelangen, so daß unmittelbar Hydroxyl- und Ethergruppen aufweisende Ester der genannten Säure entstehen; die dann als Monomere der Gruppe 1 zum Einsatz gelangen können. Beliebige Gemische der beispielhaft genannten Monomeren können ebenfalls eingesetzt werden.

Die Verwendung von derartigen, Ethergruppen oder auch zusätzliche Estergruppen aufweisenden Monomeren ist allerdings keineswegs bevorzugt.

Geeignete Monomere ohne (im Sinne der Isocyanat-Additionsreaktion) funktionelle Gruppen sind insbesondere einfach olefinisch ungesättigte Verbindungen des Molekulargewichtsbereichs 28 bis 400, vorzugsweise 80 bis 220. Hierzu gehören beispielsweise Acrylsäure- oder Methacrylsäure-alkylester oder -cycloalkylester mit 1 bis 18, vorzugsweise 1 bis 6 Kohlenstoffatomen im Alkyl- bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Oktadecylester der genannten Säuren, die 3,5,5-Trimethylcyclohexyl-, Isobornyl-oder Cyclohexylester der genannten Säuren, Acrylnitril, Ethylen, Propylen, Buten-1, Hexen-1, Octen-1, Vinylether, Methacrylnitril, Vinylacetat, Vinylchlorid, Styrol, $\alpha$-Methylstyrol, Vinyltoluol, neutrale Ester mehrbasischer Carbonsäuren wie z.B. Maleinsäure- oder Fumarsäure-dialkylester oder beliebige Gemische derartiger Monomerer.

Geeignete, gegebenenfalls mitzuverwendende Monomere (iii) sind beispielsweise anhydridfunktionelle ungesättigte Monomere wie Itaconsäureanhydrid oder Maleinsäureanhydrid, carboxylgruppenhaltige ungesättigte Monomere wie beispielsweise Acrylsäure, Methacrylsäure, Itaconsäure, Crotonsäure und Halbester der Malein-und Fumarsäure sowie deren Mischungen und epoxidfunktionelle ungesättigte Monomere wie Glycidylmethacrylat, Glycidylacrylat sowie deren Mischungen.

Zur Initiierung der radikalischen Polymerisation können Peroxidverbindungen wie z.B. symmetrische Diacylperoxide, wie z.B. Acetyl-, Propionyl-, Butyrylperoxid sowie Lauroylperoxid, symmetrische Peroxydicarbonate, wie z.B. Diethyl-, Diisopropyl-, Dicyclohexyl- sowie Dibenzylperoxidcarbonat, Dibenzoylperoxid und Brom-, Nitro-, Methyl- oder Methoxygruppen-substituierte Benzoylperoxide, Dicumylperoxid, Cumolhydroperoxid, Di-tert.-butylperoxid, tert.-Butylperoxy-2-ethyl-hexanoat, tert.-Butylperpivalat, tert.-Butylperoctoat, tert.-Butylphenylperacetat, tert.-Butyl-N-(phenylperoxy)carbonat, tert.-Butyl-N-(2,3- oder -4-chlorphenylperoxy)carbonat, tert.-Butylhydroperoxid, 2,2-Di-tert.-butylperoxybutan, tert.-Amylperbenzoat, 1,3-Bis-(tert.-butylperoxiisopropyl)-benzol, Diisopropylbenzolmonohydroperoxid und Peroxyketale, wie z.B. 2,2-Di-(tert.-amylperoxy)-propan und Ethyl-3,3-di-(tert.-amylperoxy)butyrat, Butanonperoxid; aliphatische Azoverbindungen, wie beispielsweise Azobisisobutyronitril und Azobiscyclohexannitril, Azo-bis-2-methylvaleronitril, 2,2'-Azo-bisisobuttersäurealkylester oder thermolabile hochsubstituierte Ethanderivate, beispielsweise auf Basis Benzpinakol und auf Basis silylsubstituierter Ethanderivate, aber auch energiereiche Strahlung verwendet werden.

Die Polymerisationsreaktion zur Herstellung der Polyacrylatharze b) erfolgt vorzugsweise in an sich bekannter Weise in einem geeigneten Lösungsmittel oder Lösungsmittelgemisch der an sich bekannten Art. Das als Polymerisationsmedium dienende Lösungsmittel kann beispielsweise ausgewählt sein aus der Gruppe bestehend aus Toluol, Xylol, Chlorbenzol, Butylacetat, Ethylacetat, Ethylglykolacetat, Pentylacetat, Hexylacetat, Methoxypropylacetat, Tetrahydrofuran, Dioxan, Aceton, Methylethylketon, höher substituierten Aromaten, wie z.B. Solvent Naphtha®, Schwerbenzol, verschiedene Solvesso®-Typen, verschiedene Shellsol®-Typen und Diasol® sowie höhersiedenden aliphatischen und cycloaliphatischen Kohlenwasserstoffen, wie z.B. verschiedenen Testbenzinen, Mineralterpentinöl, Isopar®-Typen, Nappar®-Typen, Tetralin und Dekalin sowie Gemischen derartiger Lösungsmittel.

Zur Durchführung des erfindungsgemäßen Verfahrens werden vorzugsweise Lösungen der Polyacrylatharze b) eingesetzt, wobei beispielsweise die bei der Herstellung der Polyacrylatharze anfallenden Lösungen direkt verwendet werden können. Es ist jedoch auch möglich, die bei der Herstellung der Polyacrylatharze eingesetzten Lösungsmittel destillativ zu entfernen und durch andere Lösungsmittel bzw. Lösungsmittelgemische der beispielhaft genannten Art zu ersetzen. Ebenfalls möglich ist die Verwendung von lösungsmittelfrei hergestellten Polyacrylatharzen, die beispielsweise vor der Durchführung der erfindungsgemäßen Umsetzung in einem geeigneten Lösungsmittel oder Lösungsmittelgemisch der genannten Art aufgenommen werden können. Im allgemeinen kommt die Komponente b) in Form von 30 bis 90 gew.-%igen Lösungen in Lösungsmitteln oder Lösungsmittelgemischen der genannten Art zum Einsatz. Die Polyisocyanatkomponente a) kann bei der Durchführung des erfindungsgemäßen Verfahrens ebenfalls in Form einer Lösung in einem Lösungsmittel der beispielhaft genannten Art oder in Substanz verwendet werden.

In den Reaktionsgemischen, die beim erfindungsgemäßen Verfahren eingesetzt werden können, können neben den erfindungswesentlichen Ausgangskomponenten a) und b) sowie den Lösungsmitteln c), gegebenenfalls auch weitere Hilfs-und Zusatzmittel d) vorliegen. Hierzu gehören beispielsweise hydroxyfunktionelle Polyester, Polyether oder Polycarbonate der an sich bekannten Art, wie sie bei den bekannten Verfahren des Standes der Technik zur Herstellung von feuchtigkeitshärtenden NCO-Prepolymeren eingesetzt worden sind. Die Mitverwendung derartiger Polyhydroxylverbindungen ist allerdings weniger bevorzugt und findet allenfalls in Mengen von bis zu 20 Gew.-%, vorzugsweise bis zu 10 Gew.-%, bezogen auf das Gewicht der lösungsmittelfreien Komponente b) statt.

Weitere, gegebenenfalls mitzuverwendende Hilfs- und Zusatzmittel d) sind beispielsweise Katalysatoren und/oder Stabilisatoren der nachstehend genannten Art, die dem Reaktionsgemisch oder dem Reaktionsprodukt vor bzw. nach der Durchführung des erfindungsgemäßen Verfahrens einverleibt werden können.

Die erfindungsgemäße Umsetzung wird im allgemeinen innerhalb des Temperaturbereichs von 20 bis 130°C, vorzugsweise 40 bis 100°C durchgeführt. Die Menge des Lösungsmittels während der erfindungsgemäßen Umsetzung entspricht hierbei einer Konzentration der Ausgangskomponenten a) und b) von insgesamt 10 bis 90, vorzugsweise 40 bis 90 Gew.-%.

Zur Durchführung der erfindungsgemäßen Umsetzung kommen die erfindungswesentlichen Ausgangskomponenten a) und b), sowie die gegebenenfalls mitverwendeten sonstigen Verbindungen d) mit alkoholischen Hydroxylgruppen in solchen Mengen zum Einsatz, die einem NCO/OH-Äquivalentverhältnis von 3:1 bis 40:1, vorzugsweise 5:1 bis 35:1, insbesondere von 7:1 bis 25:1 entsprechen. Hieraus folgt, das es sich bei den erfindungsgemäßen Verfahrensprodukten vor allem um Gemische aus Urethangruppen aufweisenden Umsetzungsprodukten aus einem Teil der Komponente a) und der Komponente b) und überschüssigem Lackpolyisocyanat a) in in Lösungsmitteln der genannten Art gelöster Form handelt. Der im Rahmen der Erfindung benutzte Begriff "NCO-Prepolymer" soll ach diese Gemische aus Urethangruppen aufweisenden Umsetzungsprodukten und überschüssigem Lackpolyisocyanat a) umfassen.

Es hat sich gezeigt, daß zur Lösung der erfindungsgemäßen Aufgabe, insbesondere zur Optimierung der Lagerstabilität der erfindungsgemäßen Verfahrensproduckte nicht nur eine genaue Beachtung der genannten Kenndaten bezüglich der Komponenten a) und b), sowie bezüglich des Äquivalentverhältnisses der Ausgangskomponenten eine Rolle spielt, sondern vielmehr auch, daß der wert B, der sich nach der Formel

$$F_1 + 2\,\frac{val_A}{val_I} \times F_2 = B$$

berechnet, bei maximal 4 liegt, wobei in dieser Formel

$F_1$ und $F_2$        für die Funktionalität der NCO- bzw. OH-Komponente steht, wobei bei ungleicher Funktionalität der Index 1 für die Komponente mit der niedrigen Funktionalität steht und

$val_A/val_I$        das Äquivalentverhältnis der Komponente b) zur Komponente a), d.h. das OH/NCO-Äquivalentverhältnis bedeutet.

Hierbei wird davon ausgegangen, daß gemäß der bevorzugten Arbeitsweise vorgegangen wird, derzufolge sich die gegenüber Isocyanatgruppen reakionsfähigen Verbindungen ausschließlich aus Polyacrylatharzen b) zusammensetzen. Falls andere Hydroxylgruppen aufweisende Reakionspartner d) mitverwendet werden, müssen selbstverständlich die hierbei resultierenden mittleren Werte der gesamten Polyhydroxykomponente in die Gleichung eingesetzt werden.

Wie bereits angedeutet, können den Verfahrensprodukten weitere Hilfs-und Zusatzmittel d) einverleibt werden. Diese Hilfs- und Zusatzmittel können, falls sie gegenüber Hydroxylgruppen inert sind, auch bereits vor der Durchführung des erfindungsgemäßen Verfahrens dem Reaktionsgemisch zugefügt werden.

Als Hilfs- und Zusatzmittel kommen beispielsweise weitere Lösungsmittel der vorstehend beispielhaft genannten Art in Betracht.

Weitere Hilfs- und Zusatzmittel sind beispielsweise Katalysatoren für die Isocyanat-Additionsreaktion wie beispielsweise Triethylamin, Tributylamin, 1,4-Diazabicyclo-(2,2,2)-octan, N,N-Dimethylbenzylamin, 2-Methylimidazol, Pyridin, Mannichbasen, Tetraalkylammoniumhydroxide und Alkalihydroxide wie Natriumhydroxid, Alkaliphenolate, Metallsalze wie Eisen-(III)-chlorid, Zinnverbindungen wie Zinn-(II)-acetat, Zinn-(II)-octoat, Zinn(II)-ethylhexoat, Zinn-(II)-laurat, Dibutylzinnoxid, Dibutylzinndichlorid, Dibutylzinndiacetat, Dibutylzinndilaurat, Dibutylzinnmaleat oder Dioctylzinndiacetat.

Die Katalysatoren liegen in den erfindungsgemäßen Verfahrensprodukten bzw. in den aus den erfindungsgemäßen Verfahrensprodukten hergestellten feuchtigkeitshärtenden Einkomponentenlacken im allgemeinen in einer Menge von 0,001 bis 10, vorzugsweise 0,01 bis 1 Gew.-% vor.

Weitere Hilfs- und Zusatzmittel, die den erfindungsgemäßen Verfahrensprodukten oder den aus ihnen hergestellten Beschichtungsmitteln zugesetzt werden können, sind beispielsweise Stabilisatoren. Als Stabilisatoren können z.B. sauer reagierade Stoffe wie Salzsäure, 2-Chlorpropionsäure, Säurehalogenide wie Benzoylchlorid, Isophthaloylchlorid und Verbindungen mit einer hochreaktiven Isocyanatgruppe wie z.B. Carbonylisocyanate oder Sulfonylisocyanate wie p-Toluylsulfonylisocyanat (Tosylisocyanat) oder Isocyanatobenzoylchloride in Konzentrationen bis 3 %, bevorzugt bis 1 %, besonders bevorzugt bis 0,5 Gew.-%, bezogen auf das Gewicht der NCO-Prepolymere, eingesetzt werden.

Bei der Herstellung von gebrauchsfertigen Beschichtungsmitteln unter Verwendung der erfindungsgemäßen Prepolymeren können diese mit weiteren aus der Polyurethanlacktechnologie üblichen Hilfs- und Zusatzmitteln vermischt werden. Hierzu gehören beispielsweise Verlaufsmittel auf Celluloseesterbasis, Oligoalkylacrylate, Pigmente und Füllstoffe, viskositätskontrollierende Zusätze wie Bentonite und Kieselsäureester, Mattierungsmittel wie beispielsweise Kieselsäure, Aluminiumsilikate und hochmolekulare Wachse.

Die auf den erfindungsgemäßen Verfahrensprodukten basierenden Beschichtungsmittel können nach allen beliebigen Methoden der Lacktechnologie wie z.B. Spritzen, Streichen, Tauchen, Gießen oder Walzen auf beliebige Substrat wie z.B. Metalle, Holz, Mauerwerk, Beton, Glas, Keramik, Kunststoffe, Textilien oder Papier aufgetragen werden.

Die erfindungsgemäßen Beshichtungsmittel zeichnen sich durch hervorragende Hydrolyse- und Lichtstabilität, schnelle Trocknungszeiten bei Temperaturen von 10 bis 60°C, guten Verlauf sowie Farbtreue bzw. Klarheit und hervorragende mechanische Eigenschaften der mit ihnen erhaltenen Beschichtungen aus.

Die folgenden Beispiele sollen die Erfindung näher erläutern, ohne sie jedoch einzuschränken. Alle Angaben in "Teilen" und "%" beziehen sich auf das Gewicht,

Verwendete Lackpolyisocyanate

A) Uretdion- und Isocyanuratgruppen aufweisendes Polyisocyanat auf Basis von HDI entsprechend Beispiel 2 der DE-OS 3 900 053

| NCO-Gehalt: | 22 % |
|---|---|
| freies HDI: | <0,5 % |
| Funktionalität: | 2,3; errechnet aus dem mittleren Molekulargewicht (Mn) aus einer dampfdruckosmometrischen Bestimmung und dem NCO-Gehalt |

B) Isocyanatgruppen-haltiges Lackpolyisocyanat auf Basis von HDI entsprechend Beispiel 1 der EP-A-0 010 589

| NCO-Gehalt: | 21,5 % |
|---|---|
| freies HDI: | <0,5 % |
| Funktionalität: | 3,9; errechnet aus dem mittleren Molekulargewicht (Mn) aus einer dampfdruckosmometrischen Bestimmung und dem NCO-Gehalt |

C) Lackpolyisocyanat, hergestellt aus 666 g (6 Val) IPDI und 73 g (1 Val) 2 Ethyl-1,3-hexandiol bei 80°C (Reaktionszeit: 2,5 h). Nach Dünnschichtdestillation bei 150°C und einem Druck von 0,1 mbar erhält man 254 g eines farblosen Polyisocyanats.

| | |
|---|---|
| NCO-Gehalt: | 12,7 % |
| freies IPDI: | <0,1 % |
| Funktionalität: | 2,0 |

Das Produkt wurde als 75 %ige Lösung in Butylacetat eingesetzt.

| | |
|---|---|
| NCO-Gehalt der Lösung: | 9,5 % |

Verwendete hydroxyfunktionelle Polyacrylatpolyole

D) In einem 15 l Edelstahlreaktor mit Rühr-, Kühl- und Heizvorrichtung wird Teil I vorgelegt und auf 145°C aufgeheizt, Teil II wird innerhalb von 3,0 Stunden, parallel dazu Teil III innerhalb von 3,5 Stunden zudosiert. Danach wird 2 Stunden bei 140°C nachgerührt.

I        2500 Teile Xylol
         1900 Teile n-Butylactat

II       3200 Teile Methylmethacrylat
         800 Teile 2-Hydroxyethylmethacrylat
         920 Teile 2-Ethylhexylacrylat
         50 Teile Acrylsäure

III      70 Teile Di-tert.-Butylperoxid
         560 Teile Butylacetat

Das Polyacrylat hat einen Festkörpergehalt von 50 %, eine Viskosität von 4000 mPa.s.

| OH-Gehalt: | 2,0 % (bez. auf Festkörper) |
|---|---|
| OH-Funktionalität: | 8; errechnet aus dem gelpermeationschromatographisch unter Verwendung von Polystyrol als Standard ermittelten Molekulargewicht Mn = 6 800 und dem titrimetrisch bestimmten OH-Gehalt |

E) In einem 15 l Edelstahlreaktor mit Rühr-, Kühl- und Heizvorrichtung wird Teil I vorgelegt und auf 145°C aufgeheizt, Teil II wird innerhalb von 3,0 Stunden, parallel zu Teil III innerhalb von 3,5 Stunden zudosiert. Danach wird 2 Stunden bei 140°C nachgerührt.

I        3200 Teile Xylol

II       2800 Teile Styrol
         1300 Teile Hydroxypropylmethacrylät*
         1800 Teile n-Butylacrylat
         40 Teile Acrylsäure

III      150 Teile Di-tert-Butylperoxy-2-ethylhexanoat, 70 % in Butylacetat
         710 Teile Butylacetat

*Isomerengemisch erhalten durch Anlagerung von Propylenoxid an Acrylsäure

EP 0 566 954 B1

Das Polyacrylat hat einen Festkörpergehalt von 50 %, eine Viskosität von 1500 mPa.s.

| OH-Gehalt: | 2,67 % (bez. auf Festkörper) |
|---|---|
| OH-Funktionalität | 7,5; ermittelt in Analogie zu Polyacrylat D |

F) In einem 10 l Edelstahlreaktor mit Rühr-, Kühl- und Heizvorrichtung wird Teil I vorgelegt und auf 125°C aufgeheizt. Teil II wird innerhalb von 3,0 Stunden, parallel dazu Teil III innerhalb von 3,5 Stunden zudosiert. Danach wird 2 Stunden bei 120°C nachgerührt.

I     2227 Teile Xylol
      1669 Teile Butylacetat

II    2960 Teile Methylmethacrylat
      689 Teile Hydroxyethylmethacrylat
      562 Teile n-Butylmethacrylat
      42 Teile Acrylsäure

III   417 Teile tert-Butylperoxy-2-ethylhexanoat, 70% in Butylacetat
      435 Teile Butylacetat

Das Polyacrylat hat einen Festkörpergehalt von 50 %, eine Viskosität von 1000 mPa.s.

| OH-Gehalt: | 2,0 % (bez. auf Festkörper) |
|---|---|
| OH-Funktionalität: | 3,5; ermittelt in Analogie zu Polyacrylat D |

Beispiele 1 bis 12

Herstellung der erfindungsgemäßen NCO-funktionellen Polyacrylatprepolymere 1 bis 8 und der nicht erfindungsgemäßen NCO-funktionellen Polyacrylatprepolymere 9 bis 12.

Zu X Val (Äquivalente) eines Lackpolyisocyanates und Y g Butylacetat als Lösungsmittel werden bei einer Temperatur von 60°C Z Val Polyacrylatpolyol zugetropft und bei dieser Temperatur weitergerührt, bis der theoretische NCO-Gehalt erreicht ist.

| Beispiele 1 bis 8: erfindungsgemäß | | | | | | | | | |
|---|---|---|---|---|---|---|---|---|---|
| Nr. | X in Val | Lackpolyisocyanat | Z in Val | Polyacrylat | Y in g | NCO-Gehalt in % | B-Wert | Stabilisierung[1] | Lagerstabilität[2] |
| 1 | 1,0 | A | 0,1 | F | 191 | 6,8 | 3,0 | nein | ja |
| 2 | 0,8 | A | 0,1 | F | 151 | 6,2 | 3,2 | nein | ja |
| 3 | 1,0 | A | 0,1 | F | 31 | 9,4 | 3,0 | ja | ja |
| 4 | 1,0 | 0,6 Val A+0,4 Val B | 0,1 | F | 194 | 6,6 | 3,6 | nein | ja |
| 5 | 1,0 | C | 0,1 | D | 444 | 3,7 | 3,6 | nein | ja |
| 6 | 1,0 | C | 0,1 | F | 282 | 5,0 | 2,7 | nein | ja |
| 7 | 0,7 | A | 0,2 | 0,1 Val F+0,1 Val 2-Ethylhexanol | 149 | 6,6 | 2,7 | ja | ja |
| 8 | 1,0 | C | 0,1 | E | 180 | 6,7 | 3,5 | ja | ja |
| Beispiele 9 bis 12: nicht erfindungsgemäß | | | | | | | | | |
| 9 | 0,4 | A | 0,1 | F | 24 | 4,7 | 4,1 | nein | nein |
| 10 | 0,8 | B | 0,1 | F | 185 | 5,3 | 4,5 | ja | nein |
| 11 | 1,0 | B | 0,1 | D | 190 | 6,2 | 5,5 | ja | nein |
| 12 | 0,8 | A | 0,1 | D | 185 | 6,2 | 4,3 | ja | nein |

[1] Stabilisierung durch Zusatz von 0,5% Tosylisocyanat, bezogen auf das Gewicht des Gesamtansatzes
[2] Die Lagerstabilität wird bejaht, falls die erhaltene Lösung nach 3-monatiger Lagerung bei Raumtemperatur nicht geliert ist

Beispiel 13

100 Teile der Lösung des Polyisocyanat-Prepolymeren gemäß Beispiel 3 in n-Butylacetat mit einem NCO-Gehalt von 9,4 % werden mit 0,6 Teilen einer 50 %igen Lösung des Beschleunigers Dibutylzinndilaurat in Solventnaphtha 100 sorgfältig verrührt. Der somit lagerstabile, verarbeitungsfertige, feuchtigkeitshärtende Einkomponenten-Polyurethanlack einer Viskosität von ca. 300 mPa.s wird in einer Naßfilmdicke von 150 μm (= ca. 50 bis 60 μm trocken) auf eine Glasplatte aufgerakelt. Es bildet sich ein völlig transparenter, glänzender, störungsfreier Film. Eigenschaften des Flüssiglackes sowie des nach 10 bis 14 Tagen völlig ausgehärteten Lackfilmes werden wie folgt gekennzeichnet:

| Flüssiglack: | |
|---|---|
| Lagerstabilität: | sehr gut |
| Staubtrocknung: | ca. 40 min |
| Sandtrocknung: | 3,5 - 4,0 h |
| Drucktrocknung: | ca. 4 h |
| Belastbarkeit: | nach 24 h |

| Lackfilm: | |
|---|---|
| Pendelhärte (Albert/König): | 170 - 180 s |
| Spanschnitt: | zähhart |
| Optik (Glanz/Transparenz): | sehr gut |

| Löserbeständigkeit: | |
|---|---|
| Testbenzin: | sehr gut |
| Solventnaphtha 100: | sehr gut |
| Methoxypropylacetat: | sehr gut |
| Aceton: | sehr gut |
| Ethanol: | sehr gut |
| Abriebfestigkeit: (Taber, Abraser, 1000 Umdrehungen, Schleifrollen CS 10, 1 kg Gewicht auf jeder Rolle) | gut (25 - 30 mg Gew.-Verlust) |

Beispiel 14

100 Teile der Lösung des Polyisocyanat-Prepolymeren aus Beispiel 4 in Butylacetat werden mit 0,6 Teilen einer 50 %igen Lösung des handelsüblichen Beschleunigers Dibutylzinndilaurat in Solventnaphtha 100 sorgfältig verrührt. Der lagerstabile, verarbeitungsfertige, feuchtigkeitshärtende Einkomponenten-Polyurethan-Klarlack einer Viskosität von ca. 100 mPa.s wird in einer Naßfilmdicke von 150 μm (= 50 bis 60 μm trocken) auf eine Glasplatte aufgerakelt. Es bildet sich ein völlig transparenter, glänzender, störungsfreier Film. Die Eigenschaften des Flüssiglackes sowie des nach 10 bis 14 Tagen völlig ausgehärteten Klarlack-Filmes werden wie folgt gekennzeichnet:

| Flüssiglack: | |
|---|---|
| Lagerstabilität: | sehr gut |
| Staubtrocknung: | 50 - 60 min |
| Sandtrocknung: | ca. 3 h |
| Drucktrocknung: | ca. 4 h |

| Lackfilm: | |
|---|---|
| Pendelhärte: | 190 - 200 s |
| Spanschnitt: | hart |
| Belastbarkeit: | nach 24 h |
| Optik: | sehr gut |

| Löserbeständigkeit: | |
|---|---|
| Testbenzin: | sehr gut |
| Solventnaphtha 100: | sehr gut |
| Methoxypropylenacetat: | sehr gut |
| Aceton: | sehr gut |
| Ethanol: | sehr gut |
| Abriebfestigkeit: (siehe Beispiel 13) | ca 30 mg |

Beispiel 15

100 Teile der Lösung des Polyisocyanat-Prepolymeren aus Beispiel 4 in Butylacetat werden mit 7,9 Teilen eines handelsüblichen Benetzungs-Hilfsmittels (Disperbyk 161 der Fa. Byk, Wesel) und 0,8 Teilen Trocknungsmittel (Toluylensulfonylmonoisocyanat) gemischt und homogen verrührt.

Es werden nun 71,3 Teile eines handelsüblichen Rutil-Titandioxides (Bayertitan R-KB-4) zugefügt und der Ansatz 15 Minuten mit einer Dissolverscheibe bei einer Druckgeschwindigkeit von 10 bis 15 m/sec dispergiert. Nach Abkühlen des Dispergieransatzes auf Raumtemperatur werden noch 66,7 Teile des Polyisocyanat-Prepolymeren 2, 0,8 Teile eines handelsüblichen Entschäumers (Byk 051, Fa. Byk, Wesel) und 1,0 Teile der in Beispiel 14 genannten Katalysator-Lösung zugeführt und homogenisiert.

Es entsteht ein lagerstabiler, verarbeitungsfertiger, feuchtigkeitshärtender Einkomponenten-Polyurethan-Weißlack einer Viskosität von 300 mPa.s. Der Weißlack wird in einer Naßfilm-Schichtdicke von 150 µm (= ca. 60 µm trocken) aufgerakelt. Es bildet sich ein gut verlaufender, glänzender, störungsfreier Weißlack-Film. Die Eigenschaften des Flüssiglackes sowie des nach 10 bis 14 Tagen völlig ausgehärteten Lackfilmes werden wie folgt skizziert:

| Flüssiglack: | |
|---|---|
| Lagerstabilität: | sehr gut |
| Staubtrocknung: | ca. 45 min |
| Sandtrocknung: | ca. 3 h |
| Drucktrocknung: | ca. 4 h |

| Lackfilm: | |
|---|---|
| Pendelhärte: | ca. 200 s |
| Spanschnitt: | hart |
| Belastbarkeit: | nach 24 h |
| Optik: | sehr gut |

| Löserbeständigkeit: | |
|---|---|
| Testbenzin: | sehr gut |
| Solventnaphtha 100: | sehr gut |
| Methoxypropylacetat: | sehr gut |
| Aceton: | sehr gut |
| Ethanol: | sehr gut |

**Patentansprüche**

1.  Verfahren zur Herstellung von lagerstabilen, freie Isocyanatgruppen aufweisenden Prepolymeren durch Umsetzung von

    a) organischen Polyisocyanaten mit

    b) Hydroxylgruppen aufweisenden Polyacrylatharzen,

    in Gegenwart von

    c) organischen Lösungsmitteln und gegebenenfalls

    d) weiteren Hilfs- und Zusatzmitteln

    unter Einhaltung eines Äquivalentverhältnisses von Isocyanatgruppen der Komponente a) zu Hydroxylgruppen der Komponente b) und gegebenenfalls d) von 3:1 bis 40:1, dadurch gekennzeichnet, daß man als Komponente a) oligomerisierte Lackpolyisocyanate mit einem Gehalt an ausschließlich (cyclo)aliphatisch gebundenen Isocyanatgruppen von 8 bis 25 Gew.-% bei einer bei maximal 4,5 liegenden NCO-Funktionalität und mit einem Gehalt an monomeren, zur Oligomerisierung eingesetzten Ausgangsdiisocyanaten von weniger als 0,7 Gew.-%, und als Komponente b) ein Polyacrylatharz des Molekulargewichtsbereichs Mn 300 bis 100 000 mit einem Gehalt an alkoholischen Hydroxylgruppen von 0,5 bis 7 Gew.-% verwendet, mit der Maßgabe, daß die Art und Mengenverhältnisse der Ausgangskomponenten a) und b) einem Wert B, der sich nach der Formel

    $$F_1 + 2\frac{val_A}{val_I} \times F_2 = B$$

    berechnet, von maximal 4 entsprechen, wobei in dieser Formel

    $F_1$ und $F_2$ für die NCO- bzw. OH-Funktionalität der Komponenten a) bzw. b) stehen, wobei der Index 1 bei ungleicher Funktionalität für die Komponente mit der niedrigeren Funktionalität steht, und $val_A/val_I$ das OH/NCO-Äquivalentverhältnis, bezogen auf die Komponenten b), gegebenenfalls d) und a) bedeutet.

2.  Verfahren gemäß Anspruch 1, dadurch gekennzeichnet, daß die mittlere NCO-Funktionalität der Komponente a) bei 2,1 bis 3,3 liegt.

3.  Verfahren gemäß Anspruch 1 und 2, dadurch gekennzeichnet, daß die mittlere Hydroxylfunktionalität der Komponente b) bei 1,5 bis 15 liegt.

4.  Verfahren gemäß Anspruch 1 bis 3, dadurch gekennzeichnet, daß die mittlere Hydroxylfunktionalität der Komponente b) bei 2,5 bis 7,5 liegt.

5.  Gemäß Anspruch 1 bis 4 erhaltene NCO-Prepolymere.

## EP 0 566 954 B1

6. Verwendung der gemäß Anspruch 1 bis 4 erhaltenen NCO-Prepolymeren zur Herstellung von feuchtigkeitshärtenden Beschichtungsmitteln.

**Claims**

1. A process for the preparation of storable prepolymers containing free isocyanate groups by reaction of

   a) organic polyisocyanates with

   b) polyacrylate resins possessing hydroxyl groups,

   in the presence of

   c) organic solvents and, optionally,

   d) other auxiliary substances and additives

   maintaining an equivalent ratio of isocyanate groups of component a) to hydroxyl groups of component b) and optionally d) of 3:1 to 40:1, characterised in that
   oligomerised lacquer polyisocyanates containing 8 to 25 wt.-% of exclusively (cyclo) aliphatically bound isocyanate groups for a maximum NCO functionality of 4.5 and containing less than 0.7 wt.% of monomer starting diisocyanates used for oligomerisation are used as component a), and
   a polyacrylate resin having a molecular weight Mn in the range from 300 to 100,000 and containing 0.5 to 7 wt.% of alcoholic hydroxyl groups is used as component b),
   with the proviso that the type and quantity ratios of the starting components a) and b) correspond to a value B calculated in accordance with the formula

$$F_1 + 2\,\frac{val_A}{Val_1}\, x\, F_2 = B$$

   of at most 4, wherein
   $F_1$ and $F_2$ in said formula stand for the NCO and OH functionality of components a) and b), the index 1 standing for the component with the lower functionality where the components differ in functionality, and
   $val_A/val_1$ represents the OH/NCO equivalent ratio, based on components b), optionally d) and a).

2. A process according to claim 1, characterised in that the average NCO functionality of component a) is 2.1 to 3.3.

3. A process according to claim 1 and 2, characterised in that the average hydroxyl functionality of component b) is 1.5 to 15.

4. A process according to claim 1 to 3, characterised in that the average hydroxyl functionality of component b) is 2.5 to 7.5.

5. NCO prepolymers obtained according to claim 1 to 4.

6. The use of the NCO prepolymers obtained according to claim 1 to 4 for the preparation of moisture-curing coating agents.

**Revendications**

1. Procédé pour la préparation de prépolymères contenant des groupes isocyanate libres, stables à la conservation, par réaction de

   a) des polyisocyanates organiques avec
   b) des résines de polyacrylates contenant des groupes hydroxy,

   en présence de

**13**

c) des solvants organiques et le cas échéant

d) d'autres produits auxiliaires et additifs,

à un rapport de 3:1 à 40:1 entre les équivalents de groupes isocyanate du composant a) et les équivalents de groupes hydroxy du composant b) et le cas échéant du composant d),
caractérisé en ce que
on utilise en tant que composant a) des polyisocyanates pour vernis oligomérisés à une teneur en groupes isocyanate à liaisons exclusivement (cyclo)aliphatiques de 8 à 25 % en poids et une fonctionnalité en groupes NCO de 4,5 au maximum, avec une teneur inférieure à 0,7 % en poids en les diisocyanates de départ monomères mis en oeuvre à l'oligomérisation et
en tant que composant b) une résine de polyacrylate de poids moléculaire Mn 300 à 100 000, à une teneur en groupes hydroxy alcooliques de 0,5 à 7 % en poids,
sous réserve que la nature et les proportions des composants de départ a) et b) correspondent à une valeur B, calculée par la formule

$$F_1 + 2\,\frac{éq._A}{éq._I}\, x\, F_2 = B$$

qui est de 4 au maximum,
$F_1$ et $F_2$ représentent respectivement les fonctionnalités en groupes NCO et en groupes OH des composants a) et b) respectivement, l'indice 1 s'appliquant, dans le cas de fonctionnalités inégales, au composant dont la fonctionnalité est la plus basse, et
$éq._A/éq._I$ représente le rapport entre les équivalents OH/NCO pour les composants b) et le cas échéant d), et a).

2. Procédé selon la revendication 1, caractérisé en ce que la fonctionnalité moyenne en groupes NCO du composant a) est de 2,1 à 3,3.

3. Procédé selon les revendications 1 et 2, caractérisé en ce que la fonctionnalité moyenne en groupe hydroxy du composant b) est de 1,5 à 15.

4. Procédé selon les revendications 1 à 3, caractérisé en ce que la fonctionnalité moyenne en groupes hydroxy du composant b) est de 2,5 à 7,5.

5. Les prépolymères à groupes NCO obtenus selon les revendications 1 à 4.

6. Utilisation des prépolymères à groupes NCO obtenus selon les revendications 1 à 4 pour la préparation de produits de revêtement durcissant sous l'action de l'humidité.